(19) Europäisches Patentamt / European Patent Office / Office européen des brevets

(11) **EP 2 546 799 B1**

(12) **EUROPEAN PATENT SPECIFICATION**

(45) Date of publication and mention
of the grant of the patent:
**20.05.2015 Bulletin 2015/21**

(51) Int Cl.:
***G06T 7/00*** (2006.01)

(21) Application number: **12004361.7**

(22) Date of filing: **08.06.2012**

(54) **Method of aligning and three-dimensional profile evaluating system**

Verfahren zur Ausrichtung, und dreidimensionales Profilbewertungssystem

Procédé d'alignement et système d'évaluation de profil tridimensionnel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2011 JP 2011127963**

(43) Date of publication of application:
**16.01.2013 Bulletin 2013/03**

(73) Proprietor: **Mitutoyo Corporation
Kawasaki-shi, Kanagawa 213-8533 (JP)**

(72) Inventor: **Umeda, Kouzo
Sapporo-shi
Hokkaido 060-0807 (JP)**

(74) Representative: **Müller-Boré & Partner
Patentanwälte PartG mbB
Friedenheimer Brücke 21
80639 München (DE)**

(56) References cited:
**US-A1- 2009 063 105    US-A1- 2009 160 852**

- **ZINSSER T. ET AL: "A refined icp algorithm for robust 3-d correspondence estimation", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE, IEEE PISCATAWAY, NJ, USA, vol. 2, 14 September 2003 (2003-09-14), pages 695-698, XP010669914, ISBN: 978-0-7803-7750-9**
- **LI Y ET AL: "Free-form surface inspection techniques state of the art review", COMPUTER AIDED DESIGN, ELSEVIER PUBLISHERS BV., BARKING, GB, vol. 36, no. 13, 1 November 2004 (2004-11-01), pages 1395-1417, XP004534040, ISSN: 0010-4485, DOI: 10.1016/J.CAD. 2004.02.009**
- **BESL P J ET AL: "A METHOD FOR REGISTRATION OF 3-D SHAPES", IEEE TRANSACTIONS ON PATTERN ANALYSIS AND MACHINE INTELLIGENCE, IEEE SERVICE CENTER, LOS ALAMITOS, CA, US, vol. 14, no. 2, 1 February 1992 (1992-02-01), pages 239-256, XP000248481, ISSN: 0162-8828, DOI: 10.1109/34.121791**

## Description

### BACKGROUND OF THE INVENTION

The present invention relates to a method of aligning and three-dimensional profile evaluating system that aligns measurement data and design data, the measurement data obtained by measuring a measurement object.

A method for measuring a product manufactured according to design data of CAD or the like, by a three-dimensional measuring instrument or the like, comparing a design value with the product actually manufactured and thereby performing an evaluation of quality or the like, is known. In this kind of method, in order to align reference positions of design data and measurement data, a method of aligning such as a best fit calculation is performed (JP 2009-264956 A). In the best fit calculation, the measurement data overall undergoes parallel and rotational shift such that the measurement data and free-form curve data or free-form surface data employing CAD data or the like used in design overlap one another in two-dimensional or three-dimensional coordinate space.

In the best fit calculation, a position coordinate in the design data which is closest to a measurement point is set as a nearest point, and the measurement data overall undergoes parallel and rotational shift such that a distance between this nearest point and the measurement point is minimized for the measurement points overall. Therefore, in the best fit calculation, a nearest point must be determined as an initial parameter for each measurement point. More specifically, for example, an appropriate number of design points selected from the design (free-form surface) data having a plurality of design points are disposed beforehand on a design free-form surface, and these disposed design points are grouped into a plurality of blocks. First, a distance between a block group and the measurement point is calculated to select several nearest blocks. Next, a shortest distance between point groups in a selected block group is obtained. Such a calculation is executed for all of the measurement points. Thus, there has been a problem that calculation of the nearest point as an initial parameter requires the greatest amount of time in the best fit calculation, and that an increasing number of measurement points leads to a further increase in calculation time.

In order to reduce such a calculation time, Zinber T. et al propose a "Picky ICP algorithm" (PROCESSINGS 2003 INTERNATIONAL CONFERENCE ON IMAGE PROCESSING, BARCELONA, SPAIN, 14-17 SEPT. 2003; vol. 2, pages 695-698, XP010669914) based on ICP (Interactive Closest Point) algorithm. In the "Picky ICP algorithm", at first, only every $2^h$-th data point is employed as a control point, where h+1 is the number of hierarchy levels. After convergence of a registration algorithm for one set of control points, a computation is continued on the next hierarchy level.

### SUMMARY OF THE INVENTION

The present invention was made in view of such points, and an object of the present invention is to provide a method of aligning capable of reducing calculation time significantly without impairing accuracy.

A method of aligning according to the present invention, that aligns a measurement point group and a design point group by an arithmetic processing unit, the measurement point group including a plurality of measurement points obtained by measuring a workpiece by a measuring instrument, and the design point group including a plurality of design points specified by design data of the workpiece, comprises: the arithmetic processing unit selecting a partial point group from the measurement point group; the arithmetic processing unit performing an alignment processing of the partial point group and the design point group to calculate a shift parameter; the arithmetic processing unit shifting the measurement point group using the shift parameter; and the arithmetic processing unit performing an alignment processing of the measurement point group after shifting and the design point group. Such a method enables an amount of calculation of initial nearest points required during a first alignment processing to be significantly reduced, and, as a result, enables the method of aligning to be significantly speeded up.

In addition, a method of aligning according to an embodiment of the present invention further comprises: the arithmetic processing unit, during the alignment processing of the measurement point group after shifting and the design point group, setting grid points in a space including the measurement point group and executing a grid-point-conversion processing for replacing each of the measurement points of the measurement point group after shifting with one of the grid points closest to the measurement point; the arithmetic processing unit obtaining from within the design point group a nearest point to each of the grid-point-converted points, the grid-point-converted points being the measurement points replaced by the grid points; and the arithmetic processing unit setting the nearest point as an initial value used in shortest distance calculation during the alignment processing of the measurement point group after shifting and the design point group.

Moreover, a method of aligning according to another embodiment of the present invention further comprises: the arithmetic processing unit, during the alignment processing of the partial point group and the design point group, obtaining from within the design point group a nearest point to each of partial points in the partial point group and setting the obtained nearest point as an initial value used in shortest distance calculation during the alignment processing of the partial point group and the design point group.

In addition, a method of aligning according to another embodiment of the present invention further comprises: the arithmetic processing unit, during obtaining from within the design point group a nearest point to each of the grid-point-converted points that are the measurement points replaced by the grid points, and when a nearest point is already set to the grid point, setting the set nearest point as the nearest point to the grid-point-converted point.

Moreover, a method of aligning according to another embodiment of the present invention further comprises: the arithmetic processing unit, during selecting the partial point group and when a distance between two of the measurement points is separated by a certain value or more, assuming the two measurement points to be points configuring a different measurement line, and, when a ratio of a number of the measurement lines and a number of the measurement points is a certain number or less, selecting the partial point group along the measurement line.

BRIEF DESCRIPTION OF THE DRAWINGS

Fig. 1 is a block diagram showing an example of a configuration of a three-dimensional profile evaluating system for realizing a method of aligning according to a first embodiment of the present invention.
Fig. 2 is a flowchart showing contents of the method of aligning in the same embodiment.
Fig. 3 is a view for explaining the method of aligning in the same embodiment.
Fig. 4 is a view for explaining the method of aligning in the same embodiment.
Fig. 5 is a view for explaining the method of aligning in the same embodiment.
Fig, 6 is a view for explaining the method of aligning in the same embodiment.
Fig. 7 is a flowchart for explaining a calculation method for a nearest point in the method of aligning in the same embodiment.

DETAILED DESCRIPTION OF THE PREFERRED EMBODIMENTS

[First Embodiment]

[System Configuration]

Next, a first embodiment of the present invention is described in detail with reference to the drawings.

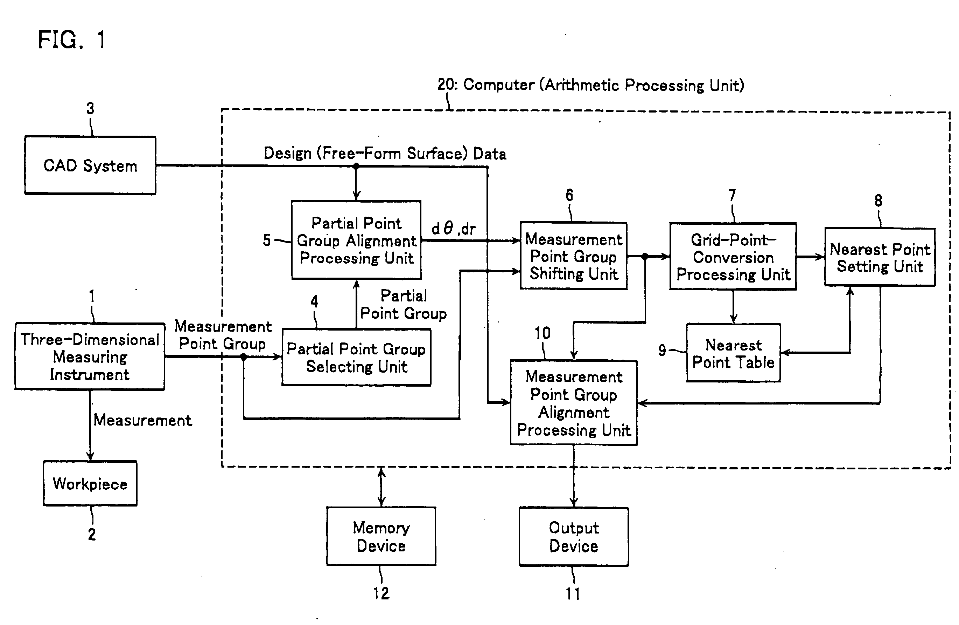

Fig. 1 is a block diagram showing an example of a configuration of a three-dimensional profile evaluating system for realizing a method of aligning according to the present embodiment, A measurement point group obtained by randomly measuring or scan-measuring a curved surface (free-form surface) to be measured of a workpiece 2 by means of a three-dimensional measuring instrument 1 is inputted to a computer 20 which is an arithmetic processing unit. Note that the measurement point group may be obtained from another profile measuring instrument or may be a measurement point group read from a memory device 12 that stores measurement-completed data.
The computer 20 is also inputted with free-form surface data (design data) outputted from a CAD system 3 or the memory device 12. The free-form surface data is expressed by a matrix $[x_{ij}]$, $[y_{ij}]$, $[z_{ij}]$ of control points such as Bezier or NURBS

(Non-Uniform Rational B-Spline).

The computer 20 realizes each of the following functions by execution of an aligning program stored in the memory device 12.
That is, a partial point group selecting unit 4 selects a partial point group from a measurement point group outputted from the three-dimensional measuring instrument 1, according to conditions mentioned later, and outputs the partial point group to a partial point group alignment processing unit 5. The partial point group alignment processing unit 5 performs an alignment processing on the partial point group and the free-form surface data outputted from the CAD system 3 to calculate, in an x-axis direction, a y-axis direction, and a z-axis direction, each of a rotational shift parameter $d\theta$ and a parallel shift parameter $dr$ of the partial point group with respect to the free-form surface data. A measurement point group shifting unit 6 is inputted with the rotational shift parameter $d\theta$ and parallel shift parameter $dr$ and the measurement point group, shifts the measurement point group using the rotational shift parameter $d\theta$ and parallel shift parameter $dr$, and outputs the result of shifting as an after-shifting measurement point group,
[0017] A grid-point-conversion processing unit 7 generates a three-dimensional grid point group, according to conditions mentioned later, to execute a grid-point-conversion processing for approximating each of measurement points to a nearest grid point. A nearest point setting unit 8 obtains a design point nearest to a grid-point-converted measurement point (hereafter called "grid-point-converted point") as a nearest point, or uses an already obtained nearest point to set a nearest point of each of the measurement points. A nearest point table 9 stores a table showing a relationship between each of the measurement points, the grid-point-converted points, and the nearest points.
A measurement point group alignment processing unit 10 performs an alignment processing of the after-shifting measurement point group using the nearest points set in the nearest point setting unit 8 and stored in the nearest point table 9. An output device 11 displays and outputs a calculation result of the measurement point group alignment processing unit 10. Applicable as the output device 11 are a display, a printer, or the like.

[Operation]

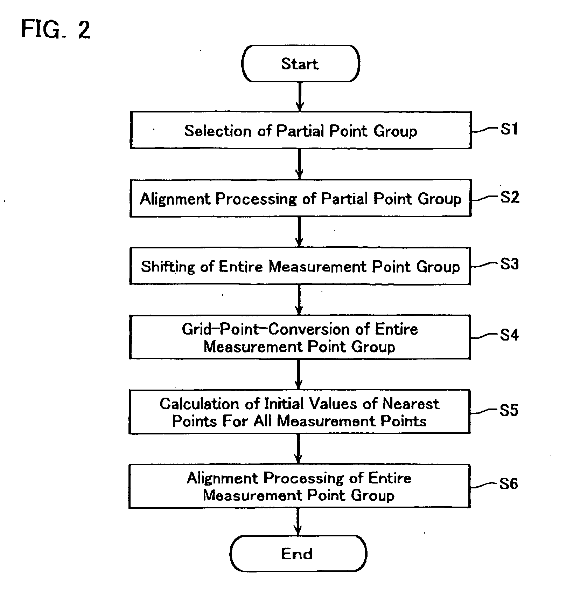

Next, operation of the three-dimensional profile evaluating system for realizing the method of aligning according to the present embodiment is described with reference to Figs. 2-7.

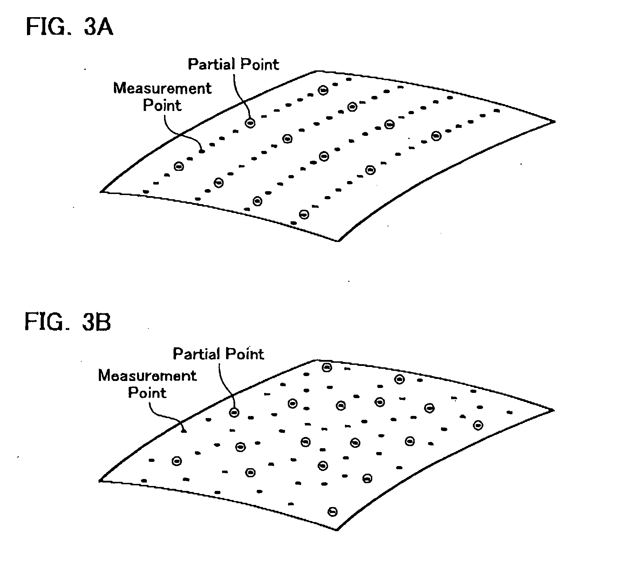

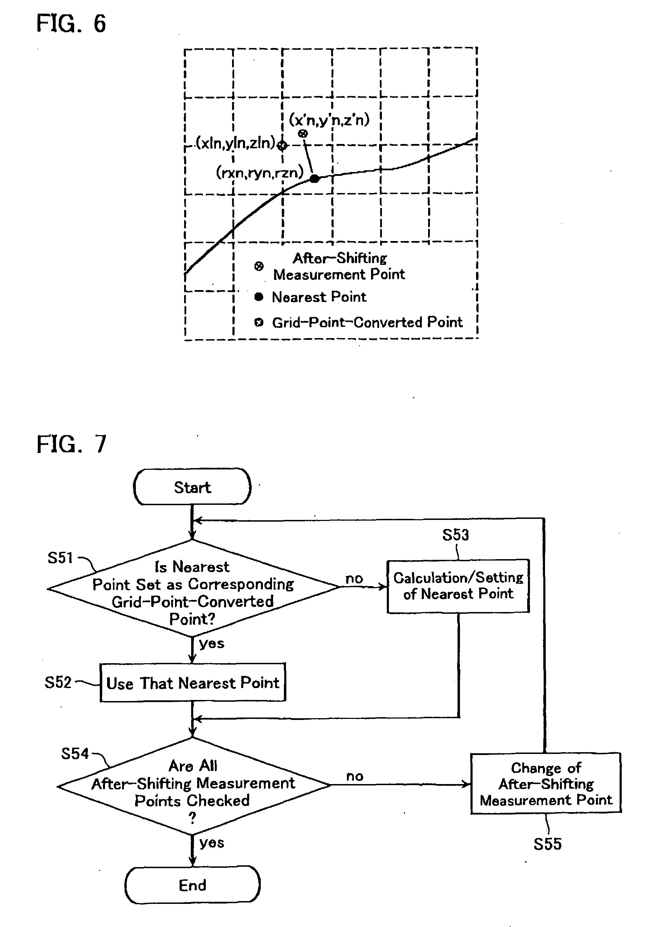

Figs. 2 and 7 are flowcharts showing the method of aligning according to the present embodiment, and Figs. 3-6 are views for explaining the method of aligning according to the present embodiment.

In the method of aligning according to the present embodiment, first, the partial point group selecting unit 4 selects a partial point group from the measurement point group overall (S1). Selection of the partial point group is able to be performed by different methods according to a nature of the measurement point group. For example, as shown in Fig. 3A, when the workpiece 2 is scan-measured, the measurement point group becomes a line group type having a fine measurement point group aligned along a measurement line. On the other hand, as shown in Fig. 3B, when a surface of the workpiece 2 undergoes random sampling, the measurement point group becomes a random type of comparatively uniform dispersion. Therefore, in selection of the partial point group, it is first judged whether the measurement point group is a random type or a line group type.

In order to judge whether the measurement point group is a random type or a line group type, the following processing is performed. First, two adjacent measurement points are compared, and if the fellow measurement points are separated by a distance of a certain value or more, those two measurement points are assumed to be points configuring different measurement lines. Next, the number of measurement points and the number of measurement lines obtained by the above-described processing is compared, and, when the number of measurement lines is a certain number (for example, 1/100 of the number of lines) or less, the measurement point group is judged to be a line group type, and, when the number of measurement lines is the certain number or above, the measurement point group is judged to be a random type.

As shown in Fig. 3A, when the measurement point group is judged to be a line group type, a partial point group is calculated at regular intervals along the measurement lines configuring a line group. For example, when the measurement point group is configured by a line group including ten measurement lines and each of the measurement lines is configured from 10,000 measurement points, 100 measurement points are selected from the 10,000 measurement points so as to be equally spaced along each of the measurement lines. This results in a partial point group containing 1,000 measurement points (10 measurement lines x 100 measurement points) being selected from the measurement point group containing 100,000 measurement points (10 measurement lines x 10,000 measurement points).

On the other hand, as shown in Fig. 3B, when the measurement point group is judged to be a random type, the partial point group is selected such that spatial distribution within the measurement point group is uniform.

In the present embodiment, this kind of method results in the partial point group being selected along a profile of the workpiece 2, and calculation processing speed in calculation of initial parameters for a shifting processing of the next measurement point group being improved. Note that in the present embodiment, processing is performed distinguishing between the linear type measurement point group and the random type measurement point group, but processing may also all be performed by a similar method to the random type.

Next, the partial point group alignment processing unit 5 performs a partial point group alignment processing on the partial point group selected in step S1 to calculate the rotational shift parameter $d\theta$ and the parallel shift parameter $dr$ of the partial point group with respect to the design (free-form surface) data (S2). The rotational shift parameter $d\theta$ and the parallel shift parameter $dr$ are calculated in each of the three directions of an x direction, a y direction, and a z direction.

A best fit calculation is performed as the partial alignment processing, In the best fit calculation, first, initial parameters required in the best fit calculation are determined, and next, the calculated initial parameters are used to actually perform the calculation. The initial parameters comprise each of measurement points included in the partial point group and a most adjacent design point in the free-form surface specified by the design data (hereinafter referred to as a "nearest point").

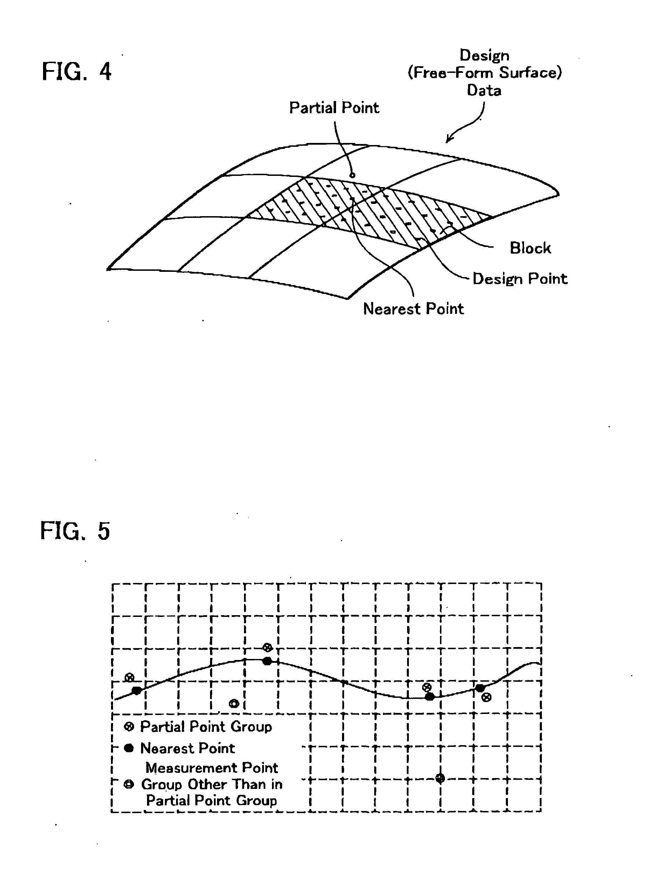

Operation of step S2 is described in further detail with reference to Fig. 4. During calculation of the initial parameters, first, an appropriate number of design point groups is disposed on the free-form surface. That is, when a Bezier curve is used in generation of the free-form surface, the design (free-form surface) data outputted from the CAD system 3 is defined by, for example, a matrix [xij], [yij], [zij] of (n+1)x(m+1) control points, and a conversion equation to a three-dimensional space is as in the following Mathematical Expressions 1.

$$x(u, v) = \sum_{i=0}^{n} \sum_{j=0}^{m} x_{ij} B_i^n(u) B_j^m(v)$$

$$y(u, v) = \sum_{i=0}^{n} \sum_{j=0}^{m} y_{ij} B_i^n(u) B_j^m(v)$$

$$z(u, v) = \sum_{i=0}^{n} \sum_{j=0}^{m} z_{ij} B_i^n(u) B_j^m(v)$$

$$B_i^n(u) = \binom{n}{i} u^i (1-u)^{n-i}$$

$$B_j^m(v) = \binom{m}{j} v^j (1-v)^{m-j}$$

Generating u and v of the free-form surface defined by the above at certain intervals and in an amount of a certain number allows the design point group to be generated on the free-form surface.

Next, as shown in Fig. 4, the generated design point group is divided into an appropriate number of blocks. Then, partial points are selected one at a time from the partial point group, an appropriate number of (about 1 to 5) blocks nearest to the selected partial point are selected from among the generated blocks, and in addition, a design point nearest to the selected partial point in the design point group in the selected block is selected as an initial nearest point.

As shown in Fig. 5, selection of the initial nearest point is aimed only at the partial point group. It is therefore possible to significantly reduce time required for computer processing compared to the case where selection of the initial nearest point is performed on the entirety of measurement points.

Next, the partial point group alignment processing unit 5 performs a best fit calculation using the calculated initial nearest point. The best fit calculation is performed by shifting the partial point group such that a sum total of distance r between the partial point group and the initial nearest point is minimized. That is, in the best fit calculation, the rotational shift parameter $d\theta$ and the parallel shift parameter $dr$ of the partial point group with respect to the free-form surface data is obtained in the x axis direction, the y axis direction, and the z axis direction such that an evaluation function function $\Sigma r$ is no greater than a certain threshold value.

Next, the measurement point group shifting unit 6 shifts the entire measurement point group using the calculated rotational shift parameter $d\theta$ and parallel shift parameter $dr$ and outputs the result of shifting as the after-shifting measurement point group (S3). The processing of step S3 makes it possible to substantially match a position of the measurement point group as a whole with the free-form surface data.

Next, the grid-point-conversion processing unit 7 executes a grid-point-conversion processing on the after-shifting measurement point group (S4).

In step S4, first, a three-dimensional grid point group is generated in the grid-point-conversion processing unit 7. During generation of three-dimensional grid points, a length, a width, and a height of a region subject to arithmetic in the spatial coordinates (hereinafter referred to as "arithmetic region") is divided with a grid interval H. Each vertex of the cubic lattice in the arithmetic region generated by the division becomes a three-dimensional grid point.

If numbers of partitions of the length, width, and height of the spatial coordinates are assumed to be, respectively, N0, N1, and N2, then the following respectively hold, namely, N0=[length of arithmetic region]/H, N1=[width of arithmetic region]/H, and N2=[height of arithmetic region]/H. An arithmetic amount and accuracy of a method of three-dimensional evaluation according to the present embodiment are proportional to N0xN1xN2. In the present embodiment, the grid interval H is determined by amount of memory installed in the computer (arithmetic processing unit) 20, but may also be adjusted appropriately by a user according to size and shape of the workpiece 2, required measurement accuracy, and so on.

When the three-dimensional grid point group is generated, next, the grid-point-conversion processing unit 7 corresponds each of the measurement points to a nearest grid point as a grid-point-converted point. For example, as shown in Fig. 6, if a nearest grid point to a measurement point (x'n, y'n, z'n) is assumed to be (xln, yln, zln), the measurement point (x'n, y'n, z'n) is grid-point-converted to the grid-point-converted point (xln, yln, zln). Measurement points in close proximity to one another are also sometimes corresponded to an identical grid-point-converted point. Replacing measurement points by grid-point-converted points results in a subsequent calculation processing of nearest points being simplified as mentioned later. A correspondence relationship between the measurement points and the grid-point-converted points is stored in the nearest point table 9.

At this time, as shown in Fig. 6, an initial nearest point has already been obtained for a measurement point included in the partial point group in step S2, hence a correspondence relationship between grid-point-converted points and initial nearest points is set simultaneously along with the correspondence relationship between measurement points and grid-point-converted points. For example, as shown in Fig. 6, if an initial nearest point (rxn, ryn, rzn) is assumed to be obtained as an after-shifting measurement point (x'n, y'n, z'n), a nearest point (rxn, ryn, rzn) is set as the grid-point-converted point (xln, yln, zln) corresponding to the after-shifting measurement point (x'n, y'n, z'n). Specifically, the nearest point (rxn, ryn, rzn) is stored in an address corresponding to the grid-point-converted point (xln, yln, zln) in the nearest point table 9. After-shifting measurement points other than in the partial point group undergo only grid-point-conversion processing in step S4.

Next, the nearest point setting unit 8 calculates the grid-point-converted point and a nearest of the nearest points for the measurement points other than in the partial point group and sets these as initial.parameters in the best fit processing of all measurement points (S5). Content of the arithmetic processing in step S5 is described in more detail with reference to Fig. 7. During step S5, when performing processing of, for example, an n-th after-shifting measurement point, first it is confirmed whether a nearest point has been stored in an address corresponding to a grid-point-converted point corresponding to the n-th after-shifting measurement point in the nearest point table 9 or not (step S51). In the case of having been stored, that stored nearest point is used as is (S52), and in the case of not having been stored, a nearest point is obtained by direct calculation and the obtained nearest point is stored in the corresponding address (S52 and S53). This processing is repeated until it has been executed for all after-shifting measurement points (S54 and S55).

This processing allows the nearest points already calculated in the partial point group alignment processing (step S2), the nearest point calculation processing (step 5) and so on, to be used as is. Therefore, for measurement points in close proximity that share a grid-point-converted point, only one time of calculation of the nearest point need be performed, allowing a corresponding amount of arithmetic processing to be omitted. More specifically, for example, in the case that the grid point interval H of the grid points generated in the grid-point-conversion processing unit 7 and the spatial distribution of the partial point group are of a similar level, then a probability that a grid-point-converted point for a measurement point other than in the partial point group is a grid point having a nearest point already set is considered to be high. This makes it possible for calculation of new nearest points in the nearest point setting unit 8 to be almost totally omitted. Thus, for example, when the number of measurement point groups is 100,000 and the number of grid-point-converted points is 1,000, then the calculation processing time becomes almost 1/100,

Next, an alignment processing is performed on all measurement points using the corrected measurement point group calculated in step S3 and the nearest point group calculated in step S5 (S6), and an arithmetic result is outputted. Note that this alignment processing may be performed by a similar method to that of step S2.

As described above, the method according to the present embodiment does not calculate nearest points for all measurement points, instead it calculates initial nearest points for a partial point group of small number selected from all measurement points and executes best fit processing. As a result, a rough alignment can be executed by a small arithmetic amount and a subsequent arithmetic burden can be reduced. Moreover, the present embodiment calculates a nearest point for every grid-point-converted point in closest proximity to a measurement point. Therefore, a significant speeding up can be achieved without impairing accuracy of calculation of shortest distance information. Moreover, during calculation of nearest points, since alignment processing is performed beforehand, determining of the nearest points is made easy.

Note that the present invention is not limited to the above-described embodiment. The above-described embodiment is configured such that the nearest point which is an initial parameter for a best fit of all the measurement points is calculated after replacing the measurement points by grid-point-converted points thereby omitting duplicated calculation of the nearest points. However, it is also possible to adopt a configuration that calculates nearest points for all measurement points without performing such grid-point-conversion processing.

**Claims**

1. A method of aligning that aligns a measurement point group and a design point group by an arithmetic processing unit (20), the measurement point group including a plurality of measurement points obtained by measuring a workpiece (2) by a measuring instrument (1), and the design point group including a plurality of design points specified by design data of the workpiece (2), the method comprising:

   selecting a partial point group from the measurement point group (S1);
   performing an alignment processing of the partial point group and the design point group to calculate a shift parameter (S2);
   shifting the measurement point group using the shift parameter (S3); and
   performing an alignment processing of the measurement point group after shifting and the design point group (S6),
   **characterized in that** the method further comprises:

   during the alignment processing of the measurement point group after shifting and the design point group (S6), setting grid points in a space including the measurement point group and executing a grid-point-conversion processing for replacing each of the measurement points of the measurement point group after shifting with one of the grid points nearest to the measurement point (S4);
   obtaining from within the design point group a nearest point to each of the grid-point-converted points, the grid-point-converted points being the measurement points replaced by the grid points (S5); and
   setting the nearest point as an initial value used in shortest distance calculation during the alignment processing of the measurement point group after shifting and the design point group (S6).

2. The method of aligning according to claim 1, further comprising:

during obtaining from within the design point group a nearest point to each of the grid-point-converted points that are the measurement points replaced by the grid points, and when a nearest point is already set to the grid point, using the set nearest point as the nearest point to the grid-point-converted point (S52).

3. The method of aligning according to any of claims 1 to 2, further comprising:

arithmetic processing unit (20), during the alignment processing of the partial point group and the design point group (S2), obtaining from within the design point group a nearest point to each of partial points in the partial point group and setting the obtained nearest point as an initial value used in shortest distance calculation during the alignment processing of the partial point group and the design point group.

4. The method of aligning according to any of claims 1 to 3, further comprising:

during selecting the partial point group (S1) and when a distance between two of the measurement points is separated by a certain value or more, assuming the two measurement points to be points configuring a different measurement line, and, when a ratio of a number of the measurement lines and a number of the measurement points is a certain number or less, selecting the partial point group along the measurement line.

5. The method of aligning according to claim 4, further comprising:

when the ratio of the number of the measurement lines and the number of the measurement points is the certain number or more, selecting the partial point group such that a spatial distribution in the measurement point group is uniform.

6. The method of aligning according to any of claims 1 to 5, further comprising:

selecting the partial point group such that a spatial distribution in the measurement point group is uniform.

7. A three-dimensional profile evaluating system, comprising:

a three-dimensional measuring instrument (1) for outputting a plurality of measurement points obtained by measuring a workpiece (2), as a measurement point group;

a CAD system (3) for outputting a design point group, the design point group including a plurality of design points specified by design data of the workpiece (2); and

an arithmetic processing unit (20) for aligning the measurement point group and the design point group, including:

a partial point group selecting unit (4) for selecting a partial point group from the measurement point group (S1); a partial point group alignment processing unit (5) for performing an alignment processing of the partial point group and the design point group to calculate a shift parameter (S2); a measurement point group shifting unit (6) for shifting the measurement point group using the shift parameter (S3); and a measurement point group alignment processing unit (10) for performing an alignment processing of the measurement point group after shifting and the design point group (S6),

**characterized in that**
the arithmetic processing unit (20) further comprises:

a grid-point-conversion processing unit (7) for setting grid points in a space including the measurement point group and executing a grid-point-conversion processing for replacing each of the measurement points of the measurement point group after shifting with one of the grid points nearest to the measurement point (S4); and a nearest point setting unit (8) for obtaining from within the design point group a nearest point to each of the grid-point-converted points, the grid-point-converted points being the measurement points replaced by the grid points (S5), wherein the measurement point group alignment processing unit (10) sets the nearest point as an initial value used in shortest distance calculation during the alignment processing of the measurement point group after shifting and the design point group.

8. The three-dimensional profile evaluating system according to claim 7, wherein the nearest point setting unit (8), during obtaining from within the design point group a nearest point to each of the grid-point-converted points that are the measurement points replaced by the grid points, and when a nearest point is already set to the grid point, uses the set nearest point as the nearest point to the grid-point-converted point (S52).

9. The three-dimensional profile evaluating system according to any of claims 7 to 8, wherein
the partial point group alignment processing unit (5), during the alignment processing of the partial point group and the design point group (S2), obtains from within the design point group a nearest point to each of partial points in the partial point group and sets the obtained nearest point as an initial value used in shortest distance calculation during the alignment processing of the partial point group and the design point group.

10. The three-dimensional profile evaluating system according to any of claims 7 to 9, wherein
the partial point group selecting unit (4), during selecting the partial point group (S1) and when a distance between two of the measurement points is separated by a certain value or more, assumes the two measurement points to be points configuring a different measurement line, and, when a ratio of a number of the measurement lines and a number of the measurement points is a certain number or less, selects the partial point group along the measurement line.

11. The three-dimensional profile evaluating system according to claim 10, wherein
the partial point group selecting unit (4), when the ratio of the number of the measurement lines and the number of the measurement points is the certain number or more, selects the partial point group such that a spatial distribution in the measurement point group is uniform.

12. The three-dimensional profile evaluating system according to any of claims 7 to 11, wherein
the partial point group selecting unit (4) selects the partial point group such that a spatial distribution in the measurement point group is uniform.

**Patentansprüche**

1. Verfahren zur Ausrichtung, das eine Gruppe aus Messpunkten bzw. eine Messpunktgruppe und eine Gruppe aus Entwurfspunkten bzw. eine Entwurfspunktgruppe durch eine Arithmetik-Prozessoreinheit (20) ausrichtet, wobei die Messpunktgruppe eine Vielzahl an Messpunkten enthält, die durch die Vermessung eines Werkstücks (2) mittels eines Messinstruments (1) erhalten werden, und wobei die Entwurfspunktgruppe eine Vielzahl an Entwurfspunkten enthält, die durch Entwurfsdaten des Werkstücks (2) festgelegt werden, wobei das Verfahren Folgendes umfasst:

auswählen einer partiellen Punktgruppe aus der Messpunktgruppe (S1);
durchführen einer Ausrichtungs-Verarbeitung der partiellen Punktgruppe und der Entwurfspunktgruppe zur Berechnung eines Verschiebungsparameters (S2);
verschieben der Messpunktgruppe unter Verwendung des Verschiebungsparameters (S3); und
durchführen einer Ausrichtungs-Verarbeitung der Messpunktgruppe nach der Verschiebung und der Entwurfspunktgruppe (S6),

**dadurch gekennzeichnet, dass** das Verfahren des Weiteren Folgendes umfasst:

während der Ausrichtungs-Verarbeitung der Messpunktgruppe nach der Verschiebung und der Entwurfspunktgruppe (S6), setzen von Rasterpunkten in einem Raum, der die Messpunktgruppe enthält und ausführen einer Raster-Punkt-Konversions-Verarbeitung, um jeden der Messpunkte der Messpunktgruppe nach der Verschiebung durch einen der Rasterpunkte zu ersetzten, der dem Messpunkt am nächsten steht (S4);
erhalten, aus der Entwurfspunktgruppe, eines nächstgelegenen Punktes zu jedem der Raster-Punkt-konvertierten Punkte, wobei die Raster-Punkt-konvertierten Punkte die durch Rasterpunkte ersetzte Messpunkte sind (S5); und
setzen des nächstgelegenen Punktes als Anfangswert in der Verwendung bei einer Berechnung des kürzesten Abstandes während der Ausrichtungs-Verarbeitung der Messpunktgruppe nach der Verschiebung und der Entwurfspunktgruppe (S6).

2. Das Verfahren zur Ausrichtung nach Anspruch 1, das des Weiteren Folgendes umfasst:

während des Erhaltens aus der Entwurfspunktgruppe eines nächstgelegenen Punktes zu jedem der Raster-Punkt-konvertierten Punkte, die durch Rasterpunkte ersetzte Messpunkte sind, und wenn ein nächstgelegener Punkt schon auf den Rasterpunkt gesetzt worden ist, verwenden des gesetzten nächstgelegenen Punktes als nächstgelegener Punkt zum Raster-Punkt-konvertierten Punkt (S52).

3. Das Verfahren zur Ausrichtung nach irgendeinem der Ansprüche 1 bis 2, das des Weiteren Folgendes umfasst:

dass die Arithmetik-Prozessoreinheit (20), während der Ausrichtungs-Verarbeitung der partiellen Punktgruppe und der Entwurfspunktgruppe (S2), aus der Entwurfspunktgruppe einen nächstgelegenen Punkt zu jedem der partiellen Punkte in der partiellen Punktgruppe erhält, und den erhaltenen nächstgelegenen Punkt als Anfangswert in der Verwendung bei einer Berechnung des kürzesten Abstandes während der Ausrichtungs-Verarbeitung der partiellen Punktgruppe und der Entwurfspunktgruppe setzt.

4. Das Verfahren zur Ausrichtung nach irgendeinem der Ansprüche 1 bis 3, das des Weiteren Folgendes umfasst:

während der Auswahl der partiellen Punktgruppe (S1) und wenn ein Abstand zwischen zwei der Messpunkte durch einen bestimmten oder höheren Wert getrennt wird, annehmen, dass die zwei Messpunkte Punkte sind, die eine andere bzw. unterschiedliche Messlinie konfigurieren, und, wenn ein Quotient aus einer Zahl der Messlinien und einer Zahl der Messpunkte einer bestimmten Zahl entspricht oder kleiner als diese ist, auswählen der partiellen Punktgruppe entlang der Messlinie.

5. Das Verfahren zur Ausrichtung nach Anspruch 4, das des Weiteren Folgendes umfasst:

wenn der Quotient aus Zahl der Messlinien und Zahl der Messpunkte der bestimmten Zahl entspricht oder größer als diese ist, auswählen der partiellen Punktgruppe, derart, dass eine räumliche Verteilung in der Messpunktgruppe gleichmäßig ist.

6. Das Verfahren zur Ausrichtung nach irgendeinem der Ansprüche 1 bis 5, das des Weiteren Folgendes umfasst:

auswählen der partiellen Punktgruppe, derart, dass eine räumliche Verteilung in der Messpunktgruppe gleichmäßig ist.

7. Ein dreidimensionales Profilbewertungssystem, das Folgendes umfasst:

ein dreidimensionales Messinstrument (1) zur Ausgabe einer Vielzahl an Messpunkten, die durch die Vermessung eines Werkstücks (2) erhalten werden, als eine Messpunktgruppe; ein CAD-System (3) zur Ausgabe einer Gruppe aus Entwurfspunkten bzw. einer Entwurfspunktgruppe, wobei die Entwurfspunktgruppe eine Vielzahl an Entwurfspunkten enthält, die durch Entwurfsdaten des Werkstücks (2) festgelegt werden; und eine Arithmetik-Prozessoreinheit (20) zur Ausrichtung der Messpunktgruppe mit der Entwurfspunktgruppe, die Folgendes beinhaltet:

eine partielle Punktgruppen-Auswahleinheit (4), zum Auswählen einer partiellen Punktgruppe aus der Messpunktgruppe (S1); eine partielle Punktgruppen-Ausrichtungs-Verarbeitungseinheit (5), zum Durchführen einer Ausrichtungs-Verarbeitung der partiellen Punktgruppe und der Entwurfspunktgruppe zur Berechnung eines Verschiebungsparameters (S2); eine Messpunktgruppen-Verschiebungseinheit (6), zum Verschieben der Messpunktgruppe unter Verwendung des Verschiebungsparameters (S3); und eine Messpunktgruppen-Ausrichtungs-Verarbeitungseinheit (10), zum durchführen einer Ausrichtungs-Verarbeitung der Messpunktgruppe nach der Verschiebung und der Entwurfspunktgruppe (S6), **dadurch gekennzeichnet, dass** die Arithmetik-Prozessoreinheit (20) des Weiteren Folgendes umfasst:

eine Raster-Punkt-Konversions-Verarbeitungseinheit (7), zum Setzen von Rasterpunkten in einem Raum, der die Messpunktgruppe enthält und Ausführen einer Raster-Punkt-Konversions-Verarbeitung, um jeden der Messpunkte der Messpunktgruppe nach der Verschiebung durch einen der Rasterpunkte zu ersetzten, der dem Messpunkt am nächsten steht (S4); und eine nächstgelegener Punkt-Setzungseinheit (8), zum Erhalten, aus der Entwurfspunktgruppe, eines nächstgelegenen Punktes zu jedem der Raster-Punkt-konvertierten Punkte, wobei die Raster-Punkt-konvertierten Punkte die durch Rasterpunkte ersetzte Messpunkte sind (S5), wobei die Messpunktgruppen-Ausrichtungs-Verarbeitungseinheit (10) den nächstgelegenen Punkt als Anfangswert in der Verwendung bei einer Berechnung des kürzesten Abstandes während der Ausrichtungs-Verarbeitung der Messpunktgruppe nach der Verschiebung und der Entwurfspunktgruppe (S6) setzt.

8. Das dreidimensionale Profilbewertungssystem nach Anspruch 7, wobei die nächstgelegener Punkt-Setzungseinheit (8), während des Erhaltens aus der Entwurfspunktgruppe eines nächstgelegenen Punktes zu jedem der Raster-Punkt-konvertierten Punkte, die durch Rasterpunkte ersetzte Messpunkte sind, und wenn ein nächstgelegener Punkt schon auf den Rasterpunkt gesetzt worden ist, den gesetzten nächstgelegenen Punkt als nächstgelegener Punkt zum Raster-Punkt-konvertierten Punkt (S52) verwendet.

9. Das dreidimensionale Profilbewertungssystem nach irgendeinem der Ansprüche von 7 bis 8, wobei die partielle Punktgruppen-Ausrichtungs-Verarbeitungseinheit (5), während der Ausrichtungs-Verarbeitung der partiellen Punktgruppe und der Entwurfspunktgruppe (S2), aus der Entwurfspunktgruppe einen nächstgelegenen Punkt zu jedem der partiellen Punkte in der partiellen Punktgruppe erhält, und den erhaltenen nächstgelegenen Punkt als Anfangswert in der Verwendung bei einer Berechnung des kürzesten Abstandes während der Ausrichtungs-Verarbeitung der partiellen Punktgruppe und der Entwurfspunktgruppe setzt.

10. Das dreidimensionale Profilbewertungssystem nach irgendeinem der Ansprüche von 7 bis 9, wobei die partielle Punktgruppen-Auswahleinheit (4), während der Auswahl der partiellen Punktgruppe (S1) und wenn ein Abstand zwischen zwei der Messpunkte durch einen bestimmten oder höheren Wert getrennt wird, annimmt, dass die zwei Messpunkte Punkte sind, die eine andere bzw. unterschiedliche Messlinie konfigurieren, und, wenn ein Quotient aus einer Zahl der Messlinien und einer Zahl der Messpunkte einer bestimmten Zahl entspricht oder kleiner als diese ist, die partielle Punktgruppe entlang der Messlinie auswählt.

11. Das dreidimensionale Profilbewertungssystem nach Anspruch 10, wobei die partielle Punktgruppen-Auswahleinheit (4), wenn der Quotient aus Zahl der Messlinien und Zahl der Messpunkte der bestimmten Zahl entspricht oder größer als diese ist, die partielle Punktgruppe derart auswählt, dass eine räumliche Verteilung in der Messpunktgruppe gleichmäßig ist.

12. Das dreidimensionale Profilbewertungssystem nach irgendeinem der Ansprüche von 7 bis 11, wobei die partielle Punktgruppen-Auswahleinheit (4) die partielle Punktgruppe derart auswählt, dass eine räumliche Verteilung in der Messpunktgruppe gleichmäßig ist.

**Revendications**

1. Un procédé d'alignement, alignant un groupe de points de mesure et un groupe de points de construction par une unité de traitement arithmétique (20), le groupe de points de mesure incluant une pluralité de points de mesure obtenus par le mesurage d'une pièce de fabrication (2) par un instrument de mesure (1), et le groupe de points de construction incluant une pluralité de points de construction spécifiés par des données de construction de la pièce de fabrication (2), le procédé comprenant le fait de :

sélectionner un groupe de points partiel parmi le groupe de points de mesure (S1) ;
effectuer un traitement d'alignement entre le groupe de points partiel et le groupe de points de construction pour calculer le paramètre de décalage (S2) ;
décaler le groupe de points de mesure en utilisant le paramètre de décalage (S3) ; et
effectuer un traitement d'alignement entre le groupe de points de mesure après le décalage et le groupe de points de construction (S6), **caractérisé en ce que** le procédé comprend en outre le fait de :

pendant le traitement d'alignement entre le groupe de points de mesure après le décalage et le groupe de points de construction (S6), établir des points de grille ou de quadrillage dans un espace incluant le groupe de points de mesure et effectuer un traitement de conversion grille-point pour remplacer chacun des points de mesure parmi le groupe de points de mesure après le décalage par un des points de grille le plus proche au point de mesure (S4) ;
obtenir parmi le groupe de points de construction un point le plus proche à chacun parmi les points convertis grille-point, les points convertis grille-point étant les points de mesure remplacés par les points de grille (S5) ; et
établir le point le plus proche en tant que valeur initiale utilisée dans un calcul du trajet le plus court pendant le traitement d'alignement du groupe de points de mesure après le décalage et le groupe de points de construction (S6).

2. Le procédé d'alignement d'après la revendication 1, comprenant en outre le fait de :

pendant l'obtention parmi le groupe de points de construction d'un point le plus proche à chacun parmi les points convertis grille-point, qui sont des points de mesure remplacés par les points de grille, et quand un point le plus proche a été déjà déterminé en tant que point de grille, utiliser le point le plus proche déterminé en tant que point le plus proche au point converti grille-point (S52).

3. Le procédé d'alignement d'après une des revendications de 1 à 2, comprenant en outre le fait que :

l'unité de traitement arithmétique (20) obtient, pendant le traitement d'alignement entre le groupe de points partiel et le groupe de points de construction (S2), à partir du groupe de points de construction un point le plus proche à chacun parmi les points partiels dans le groupe de points partiel, et établit le point le plus proche obtenu en tant que valeur initiale utilisée dans un calcul du trajet le plus court pendant le traitement d'alignement entre le groupe de points partiel et le groupe de points de construction.

4. Le procédé d'alignement d'après une des revendications de 1 à 3, comprenant en outre le fait que :

pendant la sélection du groupe de points partiel (S1) et quand une distance entre deux des points de mesure est séparée par une certaine valeur ou plus, assumer que les deux points de mesure sont des points configurant une ligne de mesure différente, et, quand un rapport entre un nombre de lignes de mesure et un nombre de points de mesure correspond à un certain nombre ou à moins, sélectionner le groupe de points partiel le long de la ligne de mesure.

5. Le procédé d'alignement d'après la revendication 4 comprenant en outre le fait de :

quand le rapport entre le nombre de lignes de mesure et le nombre de points de mesure correspond à un certain nombre ou à plus, sélectionner le groupe de points partiel de manière qu'une répartition spatiale dans le groupe de points de mesure soit uniforme.

6. Le procédé d'alignement d'après une des revendications de 1 à 5, comprenant en outre le fait de :

sélectionner le groupe de points partiel de manière qu'une répartition spatiale dans le groupe de points de mesure soit uniforme.

7. Un système d'évaluation de profil tridimensionnel, comprenant :

un instrument de mesure tridimensionnel (1) pour délivrer une pluralité de points de mesure obtenus par le mesurage d'une pièce de fabrication (2) en tant que groupe de points de mesure ;
un système de CAO (3) pour délivrer un groupe de points de construction, le groupe de points de construction incluant une pluralité de points de construction spécifiés par des données de construction de la pièce de fabrication (2), et
une unité de traitement arithmétique (20) pour aligner le groupe de points de mesure et le groupe de points de construction, incluant :

une unité de sélection de groupe de points partiel (4), pour sélectionner un groupe de points partiel parmi le groupe de points de mesure (S1) ;
une unité de traitement d'alignement de groupe de points partiel (5), pour effectuer un traitement d'alignement entre le groupe de points partiel et le groupe de points de construction pour calculer le paramètre de décalage (S2) ;
une unité de décalage de groupe de points de mesure (6), pour décaler le groupe de points de mesure en utilisant le paramètre de décalage (S3) ; et
une unité de traitement d'alignement de groupe de points de mesure (10), pour effectuer un traitement d'alignement entre le groupe de points de mesure après le décalage et le groupe de points de construction (S6),
**caractérisé en ce que**
l'unité de traitement arithmétique (20) comprend en outre :

une unité de traitement de conversion grille-point (7), pour établir des points de grille ou de quadrillage dans un espace incluant le groupe de points de mesure et effectuer un traitement de conversion grille-point pour remplacer chacun des points de mesure parmi le groupe de points de mesure après le décalage par un des points de grille le plus proche au point de mesure (S4) ; et
une unité d'établissement de point le plus proche (8), pour obtenir parmi le groupe de points de construction un point le plus proche à chacun parmi les points convertis grille-point, les points convertis grille-point étant les points de mesure remplacés par les points de grille (S5),
sachant que l'unité de traitement d'alignement de groupe de points de mesure (10) établit le point le plus proche en tant que valeur initiale utilisée dans un calcul du trajet le plus court pendant le traitement d'alignement du groupe de points de mesure après le décalage et le groupe de points de construction.

8. Le système d'évaluation de profil tridimensionnel d'après la revendication 7, sachant que

l'unité d'établissement de point le plus proche (8), pendant l'obtention parmi le groupe de points de construction d'un point le plus proche à chacun parmi les points convertis grille-point, qui sont des points de mesure remplacés par les points de grille, et quand un point le plus proche a été déjà déterminé en tant que point de grille, utilise le point le plus proche déterminé en tant que point le plus proche au point converti grille-point (S52).

9.  Le système d'évaluation de profil tridimensionnel d'après une des revendications de 7 à 8, sachant que l'unité de traitement d'alignement de groupe de points partiel (5) obtient, pendant le traitement d'alignement entre le groupe de points partiel et le groupe de points de construction (S2), à partir du groupe de points de construction un point le plus proche à chacun parmi les points partiels dans le groupe de points partiel, et établit le point le plus proche obtenu en tant que valeur initiale utilisée dans un calcul du trajet le plus court pendant le traitement d'alignement entre le groupe de points partiel et le groupe de points de construction.

10. Le système d'évaluation de profil tridimensionnel d'après une des revendications de 7 à 9, sachant que l'unité de sélection de groupe de points partiel (4) assume, pendant la sélection du groupe de points partiel (S1) et quand une distance entre deux des points de mesure est séparée par une certaine valeur ou plus, que les deux points de mesure sont des points configurant une ligne de mesure différente, et, quand un rapport entre un nombre de lignes de mesure et un nombre de points de mesure correspond à un certain nombre ou à moins, sélectionne le groupe de points partiel le long de la ligne de mesure.

11. Le système d'évaluation de profil tridimensionnel d'après la revendication 10, sachant que l'unité de sélection de groupe de points partiel (4), quand le rapport entre le nombre de lignes de mesure et le nombre de points de mesure correspond à un certain nombre ou à plus, sélectionne le groupe de points partiel de manière qu'une répartition spatiale dans le groupe de points de mesure soit uniforme.

12. Le système d'évaluation de profil tridimensionnel d'après une des revendications de 7 à 11, sachant que l'unité de sélection de groupe de points partiel (4) sélectionne le groupe de points partiel de manière qu'une répartition spatiale dans le groupe de points de mesure soit uniforme.

FIG. 1

20: Computer (Arithmetic Processing Unit)

Design (Free-Form Surface) Data

FIG. 2

```
              ┌─────────────┐
              │    Start    │
              └──────┬──────┘
                     │
                     ▼
    ┌─────────────────────────────────┐
    │   Selection of Partial Point Group │──S1
    └────────────────┬────────────────┘
                     │
                     ▼
    ┌─────────────────────────────────┐
    │ Alignment Processing of Partial Point Group │──S2
    └────────────────┬────────────────┘
                     │
                     ▼
    ┌─────────────────────────────────┐
    │ Shifting of Entire Measurement Point Group │──S3
    └────────────────┬────────────────┘
                     │
                     ▼
    ┌─────────────────────────────────┐
    │   Grid-Point-Conversion of Entire  │
    │       Measurement Point Group      │──S4
    └────────────────┬────────────────┘
                     │
                     ▼
    ┌─────────────────────────────────┐
    │  Calculation of Initial Values of Nearest │
    │   Points For All Measurement Points │──S5
    └────────────────┬────────────────┘
                     │
                     ▼
    ┌─────────────────────────────────┐
    │   Alignment Processing of Entire   │
    │       Measurement Point Group      │──S6
    └────────────────┬────────────────┘
                     │
                     ▼
              ┌─────────────┐
              │     End     │
              └─────────────┘
```

# FIG. 3A

Partial Point

Measurement
Point

# FIG. 3B

Partial Point

Measurement
Point

## FIG. 4

Design
(Free-Form Surface)
Data

Partial Point

Block

Design Point

Nearest Point

## FIG. 5

⊗ Partial Point Group

● Nearest Point

Measurement Point
Group Other Than in
⊕ Partial Point Group

## FIG. 6

(x'n,y'n,z'n)

(xln,yln,zln)

(rxn,ryn,rzn)

⊗ After-Shifting Measurement Point

● Nearest Point

◉ Grid-Point-Converted Point

## FIG. 7

Start

S51 — Is Nearest Point Set as Corresponding Grid-Point-Converted Point?

no → S53 Calculation/Setting of Nearest Point

yes

S52 — Use That Nearest Point

S54 — Are All After-Shifting Measurement Points Checked?

no → Change of After-Shifting Measurement Point

S55

yes

End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009264956 A

**Non-patent literature cited in the description**

- **ZINBER T. et al.** Picky ICP algorithm. *PROCESSINGS 2003 INTERNATIONAL CONFERENCE ON IMAGE PROCESSING,* 14 September 2003, vol. 2, 695-698